# EUROPEAN PATENT APPLICATION

(11) **EP 1 279 451 A1**
(43) Date of publication of application: **29.01.2003**
(21) Application number: 01830494.9
(22) Date of filing: 24.07.2001
(51) Int. Cl.: B23B 29/24, B23Q 3/157

(54) **Toolholding-chuck support**

(71) Applicant: Micromeccanica Di Precisione S.r.l., 23892 Bulciago (IT)
(72) Inventor: Molteni, Giovanni, 23892 Bulciago (Lecco) (IT)
(74) Representative: Siniscalco, Fabio

(57) **Abstract**

A support (1) for a toolholding chuck has a seat (13) able to accommodate the said chuck and a closing system (19), preferably with jaws (20, 20'), that is able to be coupled to the toolholding chuck and to clamp it in the said seat.

This support (1) is capable of gripping the toolholding chuck (40) firmly, optionally with the tool attached, facilitating the fitting of the tool to the chuck or assisting the removal of the said tool from the chuck quickly and efficiently.

## Description

The present invention relates to a toolholding-chuck support for a machine tool.

In the case of machine tools for machining work, the need is felt to be able to remove the tool from the toolholding chuck or, likewise, to be able to fit the tool in the toolholding chuck, quickly and efficiently.

The reason for this is that, as is known, the heating of the tool caused by machining the workpieces, and the stresses under which the said tool has come during machining, cause the tool to jam in its chuck, making it difficult to separate the two.

The solution currently used in this particular field is to remove the chuck, still with the tool, from the machine and clamp the chuck in an ordinary vice. Likewise, to fit the tool in the chuck, the chuck is clamped in an ordinary vice and the tool inserted.

It will be obvious that this solution has the enormous disadvantage of making removal or fitting of the tool slow, inefficient and insecure. In other words, this solution requires a laborious procedure of operating the ordinary vice to clamp the chuck, and yet does not even ensure that the chuck is properly held by the vice.

The problem addressed by the present invention is that of devising a support for a toolholding chuck whose structural and functional characteristics are such as to satisfy the abovementioned needs and at the same time obviate the drawbacks discussed with reference to the prior art.

This problem is solved with a support for a toolholding chuck that has a seat able to accommodate the said chuck and a closing system able to be coupled to the toolholding chuck and clamp it in the said seat.

Other characteristics and the advantages of the support according to the present invention will become clear in the course of the following description of a preferred embodiment thereof, which is given by way of non-restrictive indication, with reference to the accompanying figures, in which:

Figure 1 is a perspective view of a first example of a chuck support according to the invention and a toolholding chuck, in a configuration of disengagement between the chuck and the support;

Figure 2 is an exploded perspective view of the said first support according to the invention;

Figure 3 is a perspective view of the said first support according to the invention and a toolholding chuck, in a configuration of engagement between the chuck and the support;

Figure 4 is a perspective view of a second example of a chuck support according to the invention and a toolholding chuck, in a configuration of disengagement between the chuck and the support;

Figure 5 is an exploded perspective view of the said second support according to the invention;

Figure 6 is a perspective view of the said second support according to the invention and a toolholding chuck, in a configuration of engagement between the chuck and the support;

Figure 7 is a perspective view of a third example of a chuck support according to the invention and a toolholding chuck, in a configuration of disengagement between the chuck and the support;

Figure 8 8 is an exploded perspective view of the said third support according to the invention;

Figure 9 is a perspective view of the said third support according to the invention and a toolholding chuck, in a configuration of engagement between the chuck and the support;

Figures 10, 11 and 12 are cross sections through a central body of the support in the first, second and third examples of embodiment, respectively; and

Figure 13 is a plan view of the central body of the support in the said third example of an embodiment.

Referring to the accompanying figures, 1 is a general reference for a toolholding-chuck support.

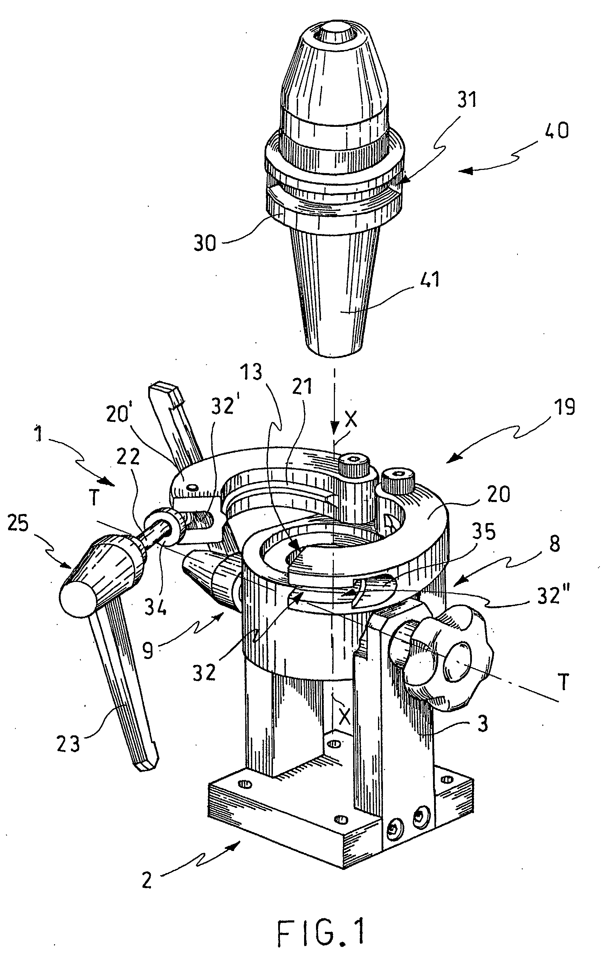

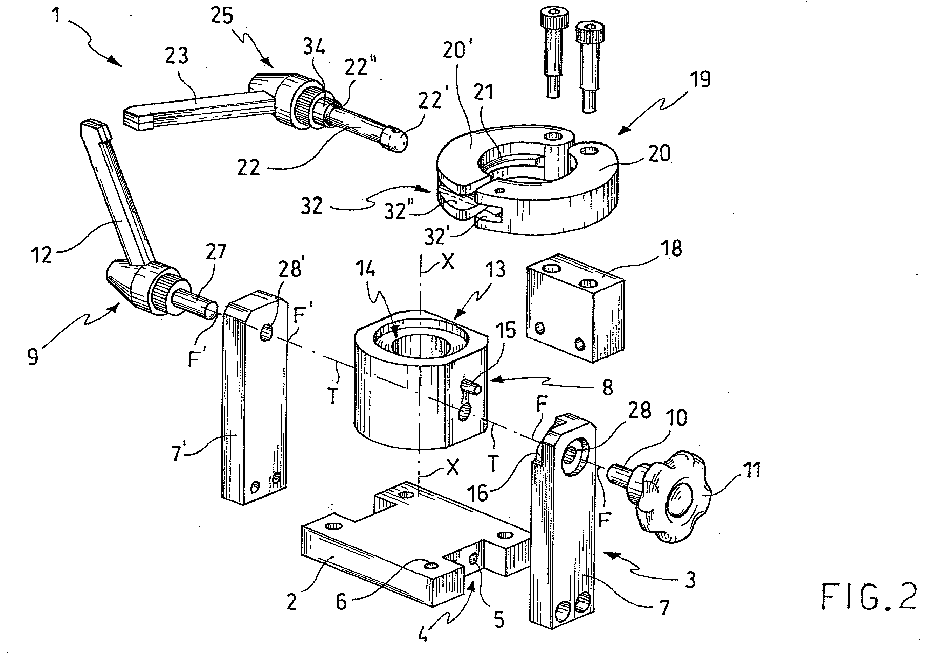

In a preferred embodiment (Figure 1 and Figure 2), the said support 1 comprises a base 2, suitably shaped so that it can be secured to mountings 3. The base 2 preferably has seats 4 that will accommodate the mountings 3 and which have holes 5 for connecting the mountings.

In a preferred embodiment, the base 2 comprises a plurality of fixing holes 6 able to accommodate fixing elements on the base 2 for fixing it to a supporting surface.

The mountings 3, secured to the base 2 by means of connecting members such as screws, bolts and the like, comprise at least two lateral shoulders 7 and 7', which are basically parallelepipeds.

The base 2 and the mountings 3 as described above are only a preferred embodiment of supporting means and mounting means, respectively, for the support 1.

The mountings 3 are functionally connected to an internally hollow central body 8 of the support 1, supporting it in position, to allow the said central body 8 to rotate about a transverse axis T-T of the central body 8.

The support 1 preferably has means 9 for clamping the central body 8; these will be functionally connected to the central body and designed to prevent the central body 8 rotating about the transverse axis T-T.

The said clamping means 9 operate with friction on the central body 8 and, in a preferred embodiment, comprise a threaded rod 10 connected to a fingerwheel 11 and a threaded rod 27 connected to a handle 12.

The threaded rod 10 of the fingerwheel 11 and the threaded rod 27 of the handle 12 engage in respective holes 28 and 28' in the mountings 3, at the opposite end of the mountings 3 from the ends engaged in the base 2.

The holes 28 and 28' extend along respective axes F-F and F'-F' at right angles to the respective shoulders 7 and 7'. The axis T-T, the axis F-F and the axis F'-F' preferably coincide.

A seat 13 is recessed into the central body 8 of the support 1 and extends, in an essentially cylindrical manner, about an axis X-X.

The seat 13 is able to accommodate a toolholding chuck 40 and preferably has one or more limit surfaces 14 able to provide a male/female connection with the toolholding chuck 40.

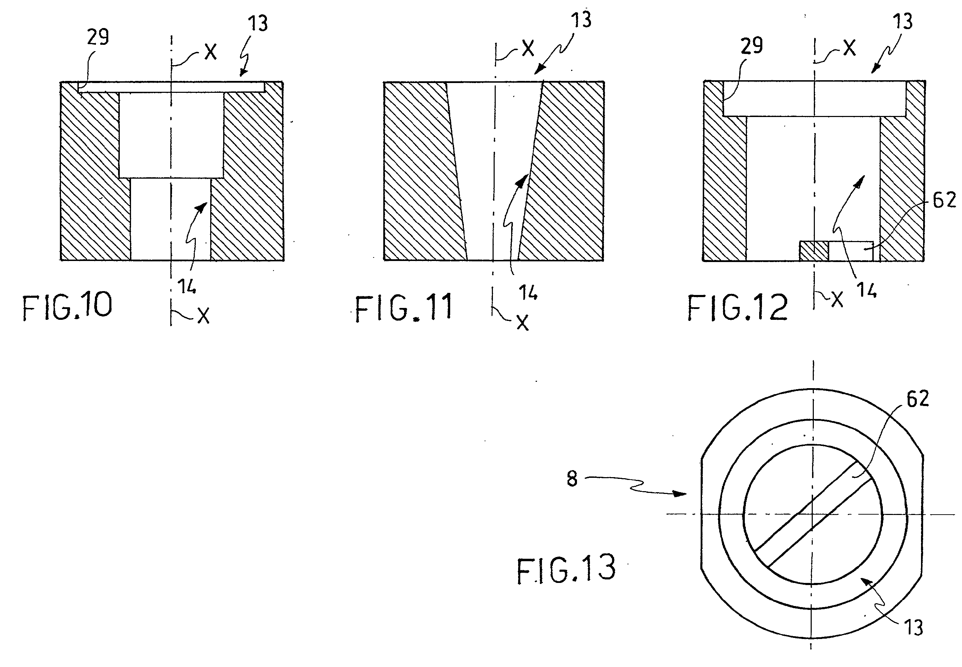

In a preferred embodiment, the limit surface 14 includes one or more reliefs 29 (Figure 10) to abut against reliefs 30 on the toolholding chuck 40.

The central body 8 is also provided with limit elements 15, typically pins, projecting from the said central body 8, which, together with seats 16, optionally formed on one of the shoulders 7 and 7' of the mountings 3, define at least two reference positions available to the central body 8.

The limit elements 15 on the central body 8 and the seat 16 on the shoulders 7 and 7' form a non-restrictive example of an embodiment of limit means for the device 1.

Additionally, the central body 8 is functionally connected, by a block 18 which is basically in the shape of a parallelepiped, to a closing system 19 designed to be coupled to the toolholding chuck 40 and clamp this chuck in the seat 13.

The closing system 19 comprises at least two jaws 20 and 20', each being essentially semicircular and connected to the block 18 by connecting members such as screws, bolts and the like.

The jaws 20 and 20' preferably comprise an internal annular relief 21 able to engage in an annular groove 31 in the toolholding chuck.

The jaws 20 and 20' also comprise an external peripheral slot 32 running tangentially to the jaws 20 and 20' and extending continuously between the two jaws 20 and 20'. The slot 32 has a first portion 32' and a second portion 32'', each being entirely contained in one of the two jaws 20 and 20'.

A closing rod 22 is held inside the first portion 32' of the groove by a bolt, screw, pin or the like which engages the first end 22' of the rod 22. The said closing rod can rotate with respect to the first end 22' of the rod 22. A second end 22'' of the closing rod 22 is threaded and fitted with a closing handle 23.

A bush 34 can move along the rod. The second end 22'' of the closing rod 22 and the bush 34 can fit into a socket 35 (Figure 1) recessed into the second portion 32" of the groove 32.

The closing handle 23, the closing rod 22 fitted with the handle 23 and the bush 34 are a preferred, non-restrictive embodiment of a releasable engagement device for the support 1 able to form the connection between the closing system 19 and the toolholding chuck 40.

The closing handle 23 is functionally attached to the closing rod 22 through a disengagement device 25 comprising an elastic return element and the like for preventing interference between the handle 23 and accidental obstacles.

The support 1 is for supporting the toolholding chuck 40 and clamping it in position in order to facilitate fitting or removal of the tool to or from the toolholding chuck.

The chuck generally comprises a chuck tail 41 whose outer surface is smooth or includes abutment surfaces.

The toolholding chuck 40, possibly carrying the machining tool, is received in the seat 13 of the central body 8 of the support, with which it engages by a male/female connection.

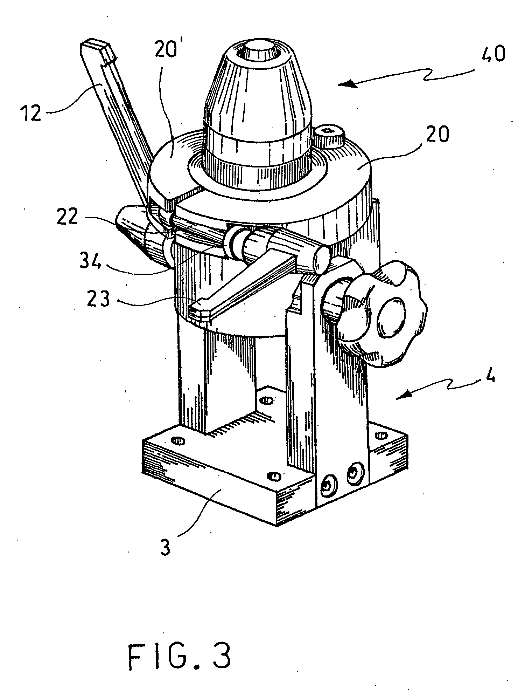

The closing system 19, in a preferred embodiment, comprising at least two jaws 20 and 20', is closed around the toolholding chuck 40 (Figure 3).

The annular relief 21 on the two jaws 20 and 20' engages in the slot 31 present on the toolholding chuck, creating a male/female connection capable of preventing the chuck from being removed from the central body 8.

The closing handle 23 is screwed along the rod 22, in a configuration of engagement with the second portion 32'' of the slot 32. The bush 34 engages with the socket 35 of the slot 32, cramping the two jaws 20 and 20' together.

The closing system 19, together with the releasable engagement device consisting of the closing handle 23, rod 22 and bush 34, is used to clamp the chuck in position, when adjusted from a configuration of disengagement (Figure 1) to a configuration of engagement (Figure 3) between the toolholding chuck and the device 1.

While the closing handle 23 is being screwed onto the rod 22, it is possible that the said closing handle 23 will interfere with accidental obstacles, such as the fingerwheel 11, the handle 12 and so forth. The means of disengagement 25 with which the support 1 is equipped are designed to avoid interference by the engagement devices 24, allowing the said devices, by means of elastic elements, to pass through a rest configuration, in which there is interference with the accidental obstacles, to an unstable configuration of disengagement from the said obstacles. The means of disengagement 25 allow the closing handle 23 to be moved away from the central body 8, allowing disengagement from the obstacles.

Removing a tool from the toolholding chuck 40 or fitting a tool to the chuck 40 can be done between two limit reference positions of the central body 8 relative to the base: a vertical limit position, in which the axis X-X is in a vertical position, and a horizontal limit position, in which the axis X-X is horizontal. The two limit reference positions of the central body 8 are defined by the pin 15 of the central body 8 which fits into the seats 16 on the shoulders 7 or 7'.

The support 1 according to the invention not only solves the problem set forth above, but also exhibits other advantages.

Unusually, the toolholding-chuck support 1 grips the toolholding chuck, optionally with the tool attached, firmly, facilitating the fitting of the tool to the chuck or assisting its removal from the chuck. The operations of fitting and removing the tool to and from the chuck are found to be rapid and efficient.

It is an advantage that the operations of fitting and removing the tool to and from the chuck are carried out away from the machine tool, thus avoiding damage to the machine itself and not compromising the tolerances.

Also, the support 1 according to the invention has the advantage of providing a coupling to the toolholding chuck which matches the (generally frustoconical and suitably shaped) form of the tail of the chuck. The result is an efficient clamping action which at the same time avoids damaging the tail of the chuck by holding it in a powerful, non-formfitting grip.

Lastly, the said support 1, in the embodiment first described, has no locking tooth to engage the chuck with seats recessed into the cone of the chuck. It is therefore also able to efficiently clamp chucks for high-speed machining, which as is well known have no seats for locking teeth.

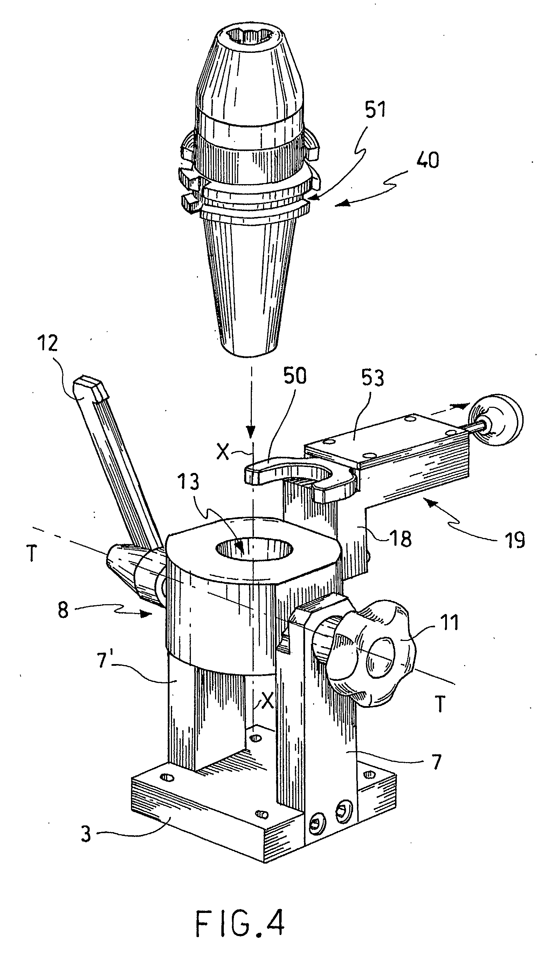

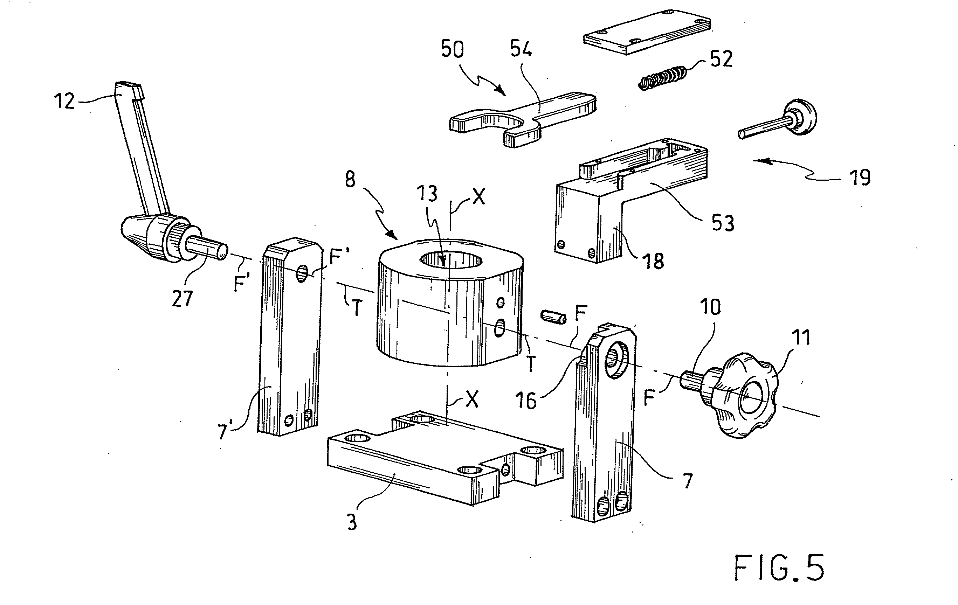

In another embodiment of the support 1 (Figure 4 and Figure 5), a seat 13 is recessed into the central body 8 to accommodate the toolholding chuck, preferably with essentially frustoconical limit surfaces 14 (Figure 11) to provide a male/female connection with the toolholding chuck 40.

The closing system 19 comprises a forked element 50 that engages in a groove 51 in the toolholding chuck 40.

The fork 50 is mounted on a boxlike element 53 connected to the block 18 to take the shank 54 of this fork 50 as well as the elastic element 52.

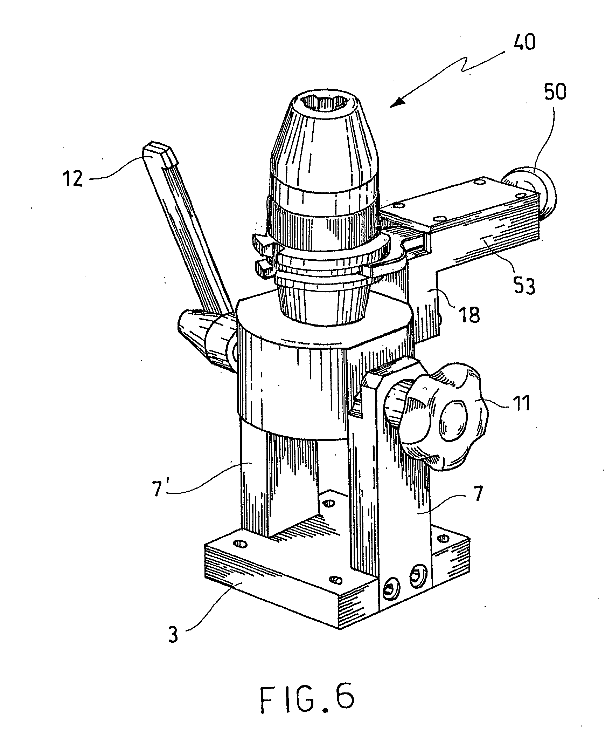

The device 1 is placed in an unstable configuration by acting against the elastic element 52, so that the fork 50 is withdrawn away from the axis X-X of the central body 8. The toolholding chuck 40 is inserted in the seat 13 and the fork 50 is released, whereupon it engages with the groove 51 of the toolholding chuck under the pressure of the elastic element 52 (Figure 6).

In the embodiment described above, the elastic element 52 is included in a releasable engagement device in another embodiment of the said engagement device.

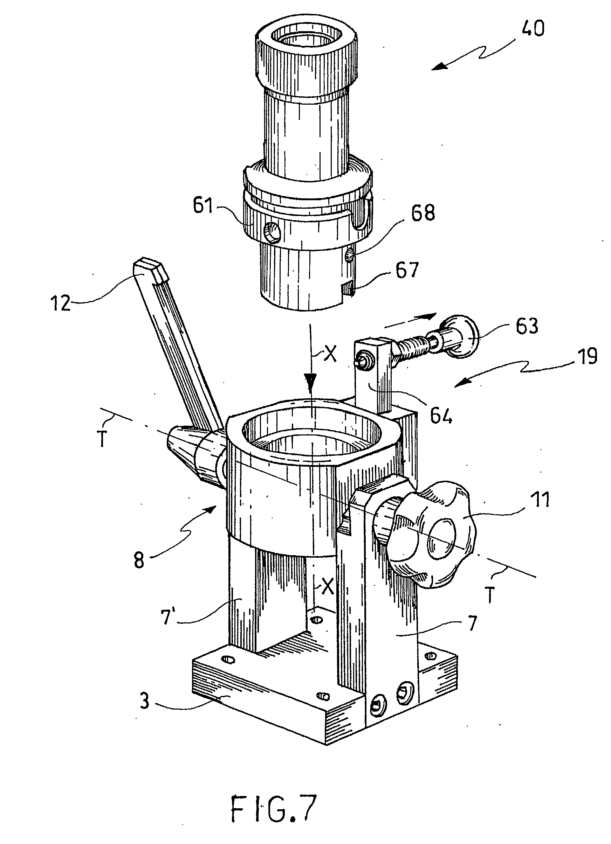

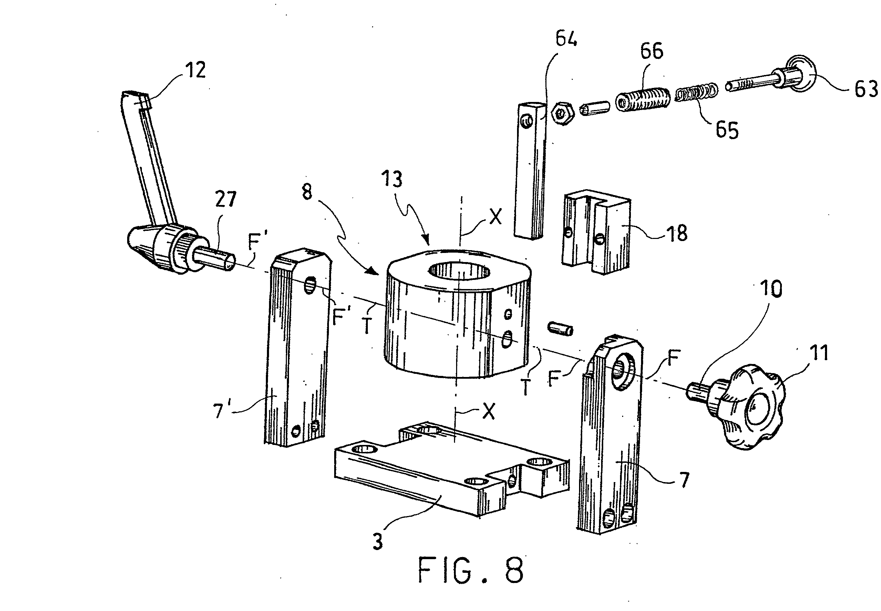

In yet another embodiment of the device 1 (Figure 7 and Figure 8), the essentially cylindrical limit surface 14 includes one or more reliefs 29 (Figure 12) which engage with one or more corresponding abutment surfaces 61 present on the bearing surface of the toolholding chuck 40.

The seat 13 has at least one limit crossmemeber 62 (Figure 12 and Figure 13) arranged on the bottom of the seat 13 to engage with a slot in the chuck 67 in a male/female connection.

The central body 8 is functionally connected, by means of the block 18, to the closing system 19, which is able to engage with the toolholding chuck and clamp it in the seat 13.

The closing system 19 comprises a key 63 for engaging in a hole 68 in the toolholding chuck.

The key 63 is connected to the block 18 by a bar 64 that is able to move inside the said block 18 in order to adjust to the position of the hole 68 of the toolholding chuck in the preloaded configuration of engagement between the said toolholding chuck and the support 1.

From a stable preloaded configuration of disengagement, with the key 63 in abutment against the bar 64, the key is moved back away from the axis X-X of the central body 8, to an unstable configuration of the device 1 (Figure 7) by acting against an elastic element 65 inserted in a positioning cylinder 66.

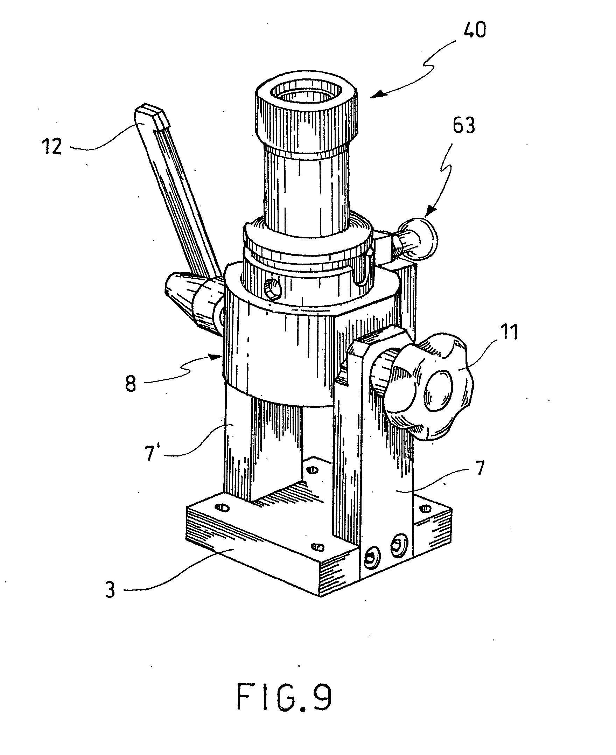

When the key 63 is released, the said key engages with the toolholding chuck 40 by means of the hole 68 in the chuck in a preloaded configuration of engagement (Figure 9).

Clearly, in order to fulfil contingent and specific needs, a person skilled in the art could make numerous modifications and alterations to the toolholding-chuck support described above, that would all come within the scope of protection of the invention as defined by the following claims.

## Claims

1. Support (1) for a toolholding chuck (40) comprising a seat (13) suitable for accommodating the said chuck and a closing system (19) suitable for being coupled to the toolholding chuck (40) and clamping it in the said seat.

2. Support according to Claim 1, wherein the seat (13) has one or more limit surfaces (14) suitable for providing a male/female connection with the toolholding chuck (40).

3. Support according to Claim 2, wherein the limit surface is shaped essentially as a frustum of a cone.

4. Support according to Claim 2, wherein the limit surface has one or more reliefs (22, 29).

5. Support according to any one of Claims 1 to 4, wherein the said seat has at least one limit crossmember (62) able to engage with a slot in the toolholding chuck (67).

6. Support according to any one of Claims 1 to 5, wherein the closing system (19) comprises a system with a key (63), the said key (63) being suitable for engaging with a hole (68) in the toolholding chuck.

7. Support according to any one of Claims 1 to 5, wherein the closing system (19) comprises a forked element (54) suitable for engaging in a groove (51) in the toolholding chuck (40).

8. Support according to any one of Claims 1 to 5, in which the said closing system comprises at least two jaws (20, 20').

9. Support according to Claim 8, wherein the said jaws comprise an internal annular relief (21) suitable for engaging in an annular groove (31) in the toolholding chuck (40).

10. Support according to Claim 9, wherein the said annular relief provides a male/female connection with the toolholding chuck capable of preventing the toolholding chuck from being removed from the central body (8).

11. Support according to Claim 9 or 10, wherein the said annular relief (21) provides a friction connection with the surfaces of the annular groove (31) of the toolholding chuck.

12. Support according to Claim 1, in which the closing system (19) comprises a releasable engagement device suitable for forming the connection between the said closing system (19) and the toolholding chuck (40).

13. Support according to Claim 12, wherein the said releasable engagement device comprises elastic elements that maintain the closing system (19) in a preloaded configuration of engagement with the toolholding chuck (40).

14. Support according to Claim 12 or 13, wherein the said engagement devices comprise a system with a threaded rod (22) and handle (23), in which the rod engages with the closing system (19) and, as it screws along the rod (22), the handle (23) maintains the closing system (19) in a configuration of engagement with the toolholding chuck (40).

15. Support according to any one of Claims from 12 to 14, wherein the said releasable engagement device comprises disengagement means, such as an elastic return element, to prevent interference between the said engagement devices and accidental obstacles, the said engagement devices moving from a rest configuration, in which there is interference with the obstacles, to an unstable configuration of disengagement from the said obstacles.

16. Support according to any one of Claims 1 to 15, comprising a base attachment means for the support to stand on a bearing surface.

17. Support according to Claim 16, wherein the said base attachment means comprise a base (2) and fixing holes to take fixing elements for fixing the base to the bearing surface.

18. Support according to any one of Claims 1 to 17, comprising mounting means (3) on which a central body (8) of the support (1) is mounted, comprising limit means for the central body that define at least two reference positions available to the said central body (8).

19. Support according to any one of Claims 1 to 18, comprising, functionally connected to a central body, clamping means containing the seat for the toolholding chuck, for clamping the said central body in position.
